# EUROPEAN PATENT APPLICATION

(11) **EP 4 692 869 A1**
(43) Date of publication of application: **11.02.2026**
(21) Application number: 24779478.7
(22) Date of filing: 13.03.2024
(51) Int. Cl.: G02B 5/30, B32B 7/022, B32B 7/023, G02B 1/14

(54) **OPTICAL LAMINATE AND DISPLAY SYSTEM**

(30) Priority: 27.03.2023 JP 2023050126
(71) Applicant: Nitto Denko Corporation, Osaka 567-8680 (JP)
(72) Inventor: KITAGAWA, Takeharu, Ibaraki-shi, Osaka 567-8680 (JP)
(74) Representative: Hoffmann Eitle
(86) International application number: PCT/JP2024/009850
(87) International publication number: WO 2024/203349

(57) **Abstract**

The present invention provides an optical laminate in which a defect is suppressed. The optical laminate of the present invention is an optical laminate, including: a polarizing member including an absorption-type polarizer and a protective layer arranged on at least one side thereof; and a first retardation member, wherein the optical laminate further includes a support layer having an indentation modulus of elasticity of 1 GPa or more, and wherein an adhesion layer is arranged directly adjacent to the support layer.

## Description

### Technical Field

The present invention relates to an optical laminate and a display system.

### Background Art

Image display apparatus typified by a liquid crystal display apparatus and an electroluminescence (EL) display apparatus (e.g., an organic EL display apparatus) have been rapidly gaining more widespread use. In the image display apparatus, an optical member, such as a polarizing member or a retardation member, has been generally used for achieving image display and improving the performance of the image display (see, for example, Patent Literature 1).

In recent years, new applications of the image display apparatus have been developed. For example, a pair of goggles (VR goggles) with a display for achieving virtual reality (VR) has started to be commercialized. In the pair of VR goggles, a viewer is caused to view an image displayed on its display while the image is enlarged. Accordingly, in an optical laminate to be applied to the pair of VR goggles, even a small defect that is allowable in an optical laminate to be applied to a conventional image display apparatus may become a problem.

### Citation List

### Patent Literature

[PTL 1] JP 2021-103286 A

### Summary of Invention

### Technical Problem

An object of the present invention is to provide an optical laminate in which a defect is suppressed.

### Solution to Problem

[1] According to one aspect of the present invention, there is provided an optical laminate, including: a polarizing member including an absorption-type polarizer and a protective layer arranged on at least one side thereof; and a first retardation member, wherein the optical laminate further includes a support layer having an indentation modulus of elasticity of 1 GPa or more, and wherein an adhesion layer is arranged directly adjacent to the support layer.
[2] The optical laminate according to the above-mentioned item [1] may include a surface adhesion layer, the polarizing member, a first adhesion layer, the first retardation member, a second adhesion layer, and a protective member in the stated order.
[3] In the optical laminate according to the above-mentioned item [2], at least one selected from the surface adhesion layer, the first adhesion layer, and the second adhesion layer may be arranged directly adjacent to the support layer.
[4] The optical laminate according to the above-mentioned item [1] may include a surface adhesion layer, a second retardation member, a third adhesion layer, the polarizing member, a first adhesion layer, the first retardation member, a second adhesion layer, and a protective member in the stated order.
[5] In the optical laminate according to the above-mentioned item [4], at least one selected from the surface adhesion layer, the first adhesion layer, the second adhesion layer, and the third adhesion layer may be arranged directly adjacent to the support layer.
[6] In the optical laminate according to any one of the above-mentioned items [1] to [5], the support layer may be a hard coat layer.
[7] In the optical laminate according to any one of the above-mentioned items [1] to [6], the support layer may have a thickness of from 0.5 µm to 15 µm.
[8] In the optical laminate according to any one of the above-mentioned items [1] to [7], the support layer may be arranged directly adjacent to a side of the polarizing member opposite to a side on which the first retardation member is arranged.
[9] In the optical laminate according to any one of the above-mentioned items [1] to [8], the adhesion layer arranged directly adjacent to the support layer may have a modulus of elasticity of from 0.01 MPa to 1 MPa.
[10] According to another aspect of the present invention, there is provided a display system, including the optical laminate of any one of the above-mentioned items [1] to [9].

### Advantageous Effects of Invention

According to the embodiment of the present invention, the optical laminate in which a defect such as an air bubble is suppressed can be provided.

### Brief Description of Drawings

FIG. **1** is a schematic view for illustrating the schematic configuration of the display system of a pair of VR goggles according to one embodiment of the present invention.
FIG. **2** is a schematic sectional view for illustrating the schematic configuration of an optical laminate according to one embodiment of the present invention.
FIG. **3** is a schematic sectional view for illustrating the schematic configuration of an optical laminate according to one embodiment of the present invention.

### Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention. In addition, in the drawings, the same or similar components are denoted by the same reference symbols, and repetitive description thereof may be omitted.

### (Definitions of Terms and Symbols)

The definitions of terms and symbols used herein are as described below.

### (1) Refractive Indices (nx, ny, and nz)

"nx" represents a refractive index in a direction in which an in-plane refractive index is maximum (that is, slow axis direction), "ny" represents a refractive index in a direction perpendicular to a slow axis in a plane (that is, fast axis direction), and "nz" represents a refractive index in a thickness direction.

### (2) In-plane Retardation (Re)

"Re(λ)" refers to an in-plane retardation measured at 23°C with light having a wavelength of λ nm. For example, "Re(550)" refers to an in-plane retardation measured at 23°C with light having a wavelength of 550 nm. The Re(λ) is determined from the equation "Re(λ)=(nx-ny)×d" when the thickness of a layer (film) is represented by "d" (nm).

### (3) Thickness Direction Retardation (Rth)

"Rth(λ)" refers to a thickness direction retardation measured at 23°C with light having a wavelength of λ nm. For example, "Rth(550)" refers to a thickness direction retardation measured at 23°C with light having a wavelength of 550 nm. The Rth(λ) is determined from the equation "Rth(λ)=(nx-nz)×d" when the thickness of a layer (film) is represented by "d" (nm).

### (4) Nz Coefficient

An Nz coefficient is determined from the equation "Nz=Rth/Re".

### (5) Angle

When reference is made to an angle herein, the angle encompasses both angles in a clockwise direction and a counterclockwise direction with respect to a reference direction. Accordingly, for example, the term "45°" means ±45°. In addition, the phrase "substantially parallel" as used herein encompasses a case in which the angle falls within the range of 0°±10°, and the angle falls within the range of, for example, 0°±5°, preferably 0°±3°, more preferably 0°±1°, and the phrase "substantially perpendicular" as used herein encompasses a case in which the angle falls within the range of 90°±10°, and the angle falls within the range of, for example, 90°±5°, preferably 90°±3°, more preferably 90°±1°.

### A. Display System

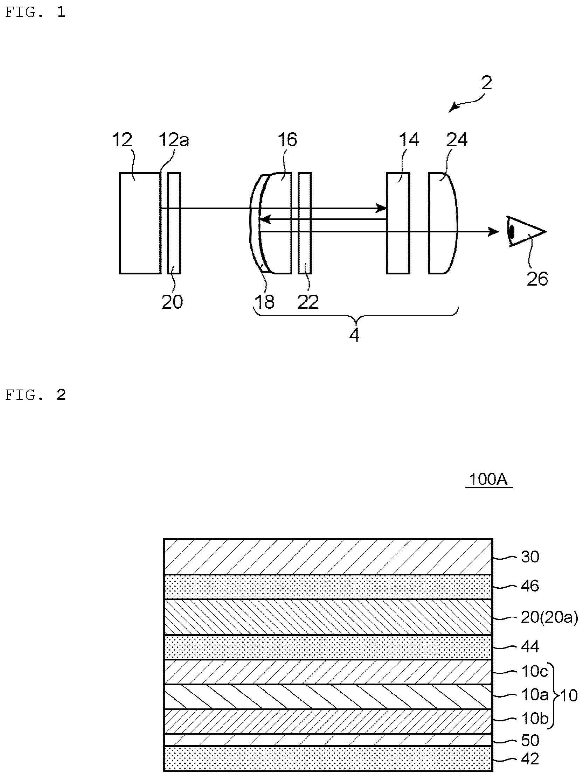

FIG. 1 is a schematic sectional view for illustrating the schematic configuration of a display system according to one embodiment of the present invention. The arrangement, shapes, and the like of the respective constituents of a display system **2** are schematically illustrated in FIG. **1****.** The display system **2** includes a display element **12,** a reflection-type polarizing member **14,** a first lens portion **16,** a half mirror **18,** a first retardation member **20,** a lens portion retardation member **22,** and a second lens portion **24.** The reflection-type polarizing member **14** is arranged on the front side of the display element **12,** that is, on the display surface **12a** side thereof, and can reflect light emitted from the display element **12.** The first lens portion **16** is arranged on an optical path between the display element **12** and the reflection-type polarizing member **14,** and the half mirror **18** is arranged between the display element **12** and the first lens portion **16.** The first retardation member **20** is arranged on an optical path between the display element **12** and the half mirror **18,** and the lens portion retardation member **22** is arranged on an optical path between the half mirror **18** and the reflection-type polarizing member **14.**

The half mirror and the constituents arranged on the front side thereof (in the illustrated example, the half mirror **18,** the first lens portion **16,** the lens portion retardation member **22,** the reflection-type polarizing member **14,** and the second lens portion **24**) are sometimes collectively referred to as "lens unit (lens unit **4**)."

The display element **12** is, for example, a liquid crystal display or an organic EL display, and has a display surface **12a** for displaying an image. The light to be emitted from the display surface **12a** passes through, for example, a polarizing member (typically, a polarizing film) that may be incorporated into the display element **12** to be emitted as first linearly polarized light.

The first retardation member **20** includes a first A/4 member that can convert the first linearly polarized light, which has entered the first retardation member **20,** into first circularly polarized light. When the first retardation member is free of any member other than the first λ/4 member, the first retardation member may correspond to the first λ/4 member. The first retardation member **20** may be arranged integrally with the display element **12.**

The half mirror **18** transmits the light emitted from the display element **12,** and reflects the light reflected by the reflection-type polarizing member **14** toward the reflection-type polarizing member **14.** The half mirror **18** is arranged integrally with the first lens portion **16.**

The lens portion retardation member **22** includes a second λ/4 member that can cause the light, which has been reflected by the reflection-type polarizing member **14** and the half mirror **18,** to penetrate through the reflection-type polarizing member **14.** When the lens portion retardation member is free of any member other than the second λ/4 member, the lens portion retardation member may correspond to the second λ/4 member. The lens portion retardation member **22** may be arranged integrally with the first lens portion **16.**

The first circularly polarized light emitted from the first λ/4 member in the first retardation member **20** passes through the half mirror **18** and the first lens portion **16,** and is converted into second linearly polarized light by the second λ/4 member in the lens portion retardation member **22.** The second linearly polarized light emitted from the second λ/4 member is reflected toward the half mirror **18** without penetrating through the reflection-type polarizing member **14.** At this time, the polarization direction of the second linearly polarized light that has entered the reflection-type polarizing member **14** is the same direction as that of the reflection axis of the reflection-type polarizing member **14.** Accordingly, the second linearly polarized light that has entered the reflection-type polarizing member **14** is reflected by the reflection-type polarizing member **14.**

The second linearly polarized light reflected by the reflection-type polarizing member **14** is converted into second circularly polarized light by the second λ/4 member in the lens portion retardation member **22,** and the second circularly polarized light emitted from the second λ/4 member passes through the first lens portion **16,** and is reflected by the half mirror **18.** The second circularly polarized light reflected by the half mirror **18** passes through the first lens portion **16,** and is converted into third linearly polarized light by the second λ/4 member in the lens portion retardation member **22.** The third linearly polarized light penetrates through the reflection-type polarizing member **14.** At this time, the polarization direction of the third linearly polarized light that has entered the reflection-type polarizing member **14** is the same direction as that of the transmission axis of the reflection-type polarizing member **14.** Accordingly, the third linearly polarized light that has entered the reflection-type polarizing member **14** penetrates through the reflection-type polarizing member **14.**

The light that has penetrated through the reflection-type polarizing member **14** passes through the second lens portion **24** to enter an eye **26** of a user.

The display system 2 may include an absorption-type polarizing member arranged on the front side of the reflection-type polarizing member **14,** though the absorption-type polarizing member is not shown. The reflection axis of the reflection-type polarizing member and the absorption axis of the absorption-type polarizing member may be arranged substantially parallel to each other, and the transmission axis of the reflection-type polarizing member and the transmission axis of the absorption-type polarizing member may be arranged substantially parallel to each other. Thus, the third linearly polarized light that has penetrated through the reflection-type polarizing member **14** can penetrate as it is through the absorption-type polarizing member.

The advance of the light from its emission from the display element **12** to its entry into the user's eye **26** has been described above for the display system **2.** However, part of the light (not shown), which has been emitted from the display element **12** and has entered the half mirror **18,** may be reflected by the half mirror **18,** and part of the light (not shown), which has been reflected by the reflection-type polarizing member **14** and has entered the half mirror **18,** may penetrate through the half mirror **18.**

For example, the absorption axis of the polarizing member in the display element **12** and the reflection axis of the reflection-type polarizing member **14** may be arranged substantially parallel to each other, or may be arranged substantially perpendicular to each other. An angle formed by the absorption axis of the polarizing member in the display element **12** and the slow axis of the first λ/4 member in the first retardation member **20** is, for example, from 40° to 50°, and may be from 42° to 48°, or may be about 45°. An angle formed by the absorption axis of the polarizing member in the display element **12** and the slow axis of the second λ/4 member in the lens portion retardation member **22** is, for example, from 40° to 50°, and may be from 42° to 48°, or may be about 45°.

The in-plane retardation Re(550) of the first λ/4 member is, for example, from 100 nm to 190 nm, and may be from 110 nm to 180 nm, may be from 130 nm to 160 nm, or may be from 135 nm to 155 nm. The first λ/4 member preferably shows such a reverse wavelength dispersion characteristic that its retardation value increases with an increase in wavelength of measurement light. The first λ/4 member preferably satisfies the relationship of Re(450)<Re(550)<Re(650). The ratio "Re(450)/Re(550)" of the first λ/4 member is, for example, 0.75 or more and less than 1, and may be 0.8 or more and 0.95 or less.

The in-plane retardation Re(550) of the second λ/4 member is, for example, from 100 nm to 190 nm, and may be from 110 nm to 180 nm, may be from 130 nm to 160 nm, or may be from 135 nm to 155 nm. The second λ/4 member preferably shows such a reverse wavelength dispersion characteristic that its retardation value increases with an increase in wavelength of measurement light. The second λ/4 member preferably satisfies the relationship of Re(450)<Re(550)<Re(650). The ratio "Re(450)/Re(550)" of the second λ/4 member is, for example, 0.75 or more and less than 1, and may be 0.8 or more and 0.95 or less.

### B. Optical Laminate

An optical laminate according to an embodiment of the present invention may include, for example, an optical member to be included in the display system described in the section A, and may be incorporated as a member for forming the above-mentioned display system into the above-mentioned display system. Specifically, the optical laminate according to the embodiment of the present invention includes: a polarizing member including an absorption-type polarizer and a protective layer arranged on at least one side thereof; and a first retardation member. In addition, the optical laminate according to the embodiment of the present invention may include an adhesion layer for integrating the respective members for forming the laminate itself with each other and/or an adhesion layer (also referred to as "surface adhesion layer") for bonding the laminate itself to any other member. The optical laminate according to the embodiment of the present invention further includes a support layer having a predetermined indentation modulus of elasticity, and an adhesion layer is arranged directly adjacent to the support layer. The phrase "directly adjacent" as used herein means that two layers are directly adjacent to each other without via any adhesion layer. In addition, the simple term "adjacent" as used herein may encompass not only a case in which two layers are directly adjacent to each other without via any adhesion layer but also a case in which the layers are adjacent to each other via an adhesion layer.

The production of the above-mentioned optical laminate may include laminating an adhesion layer on a member for forming the laminate. At that time, however, a small air bubble occurs at an interface therebetween, and the air bubble becomes a defect in some cases. In contrast, according to the embodiment of the present invention, the problem of the air bubble can be suppressed because the adhesion layer is arranged so as to be directly adjacent to the support layer. The reason why the effect is exhibited is assumed to be as described below, though the assumption by no means limits the present invention. That is, when unevenness is present on the surface of a member on which the adhesion layer is to be laminated at the time of the lamination, an air bubble may occur owing to the unevenness. However, when the support layer having a predetermined indentation modulus of elasticity is arranged, and the adhesion layer is laminated on the support layer, the occurrence of such air bubble can be suppressed.

FIG. **2** is a schematic sectional view for illustrating the schematic configuration of the optical laminate according to one embodiment of the present invention. An optical laminate **100A** includes a surface adhesion layer **42,** a polarizing member **10,** a first adhesion layer **44,** the first retardation member **20,** a second adhesion layer **46,** and a protective member **30** in the stated order. In the optical laminate **100A,** a support layer **50** is arranged directly adjacent to the surface adhesion layer **42** side of the polarizing member **10,** and the surface adhesion layer **42** is arranged directly adjacent to the support layer **50.** The polarizing member **10** may correspond to the polarizing member that may be incorporated into the display element **12** of the above-mentioned display system **2.** The first retardation member **20** includes a first λ/4 member **20a,** and may correspond to the first retardation member **20** of the above-mentioned display system **2.** For example, when the display element **12** is a liquid crystal display, the polarizing member **10** may be used as the viewer-side polarizing member of a liquid crystal panel, which includes a back surface-side polarizing member, a liquid crystal cell, and the viewer-side polarizing member in the stated order, by bonding the optical laminate **100A** to the front side (viewer side) of the liquid crystal cell via the surface adhesion layer **42.**

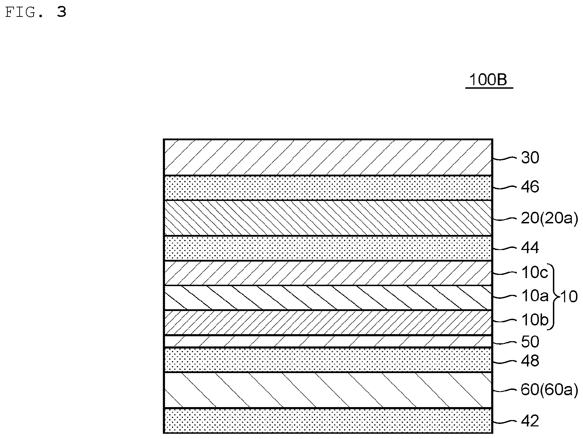

FIG. **3** is a schematic sectional view for illustrating the schematic configuration of the optical laminate according to one embodiment of the present invention. An optical laminate **100B** includes the surface adhesion layer **42,** a second retardation member **60,** a third adhesion layer **48,** the polarizing member **10,** the first adhesion layer **44,** the first retardation member **20,** the second adhesion layer **46,** and the protective member **30** in the stated order. In the optical laminate **100B,** the support layer **50** is arranged directly adjacent to the third adhesion layer **48** side of the polarizing member **10,** and the third adhesion layer **48** is arranged directly adjacent to the support layer **50.** The polarizing member **10** may correspond to the polarizing member that may be incorporated into the display element **12** of the above-mentioned display system **2.** The first retardation member **20** includes the first λ/4 member **20a,** and may correspond to the first retardation member **20** of the above-mentioned display system **2.** The second retardation member **60** may correspond to a retardation member that may be incorporated into the display element **12.** For example, the second retardation member **60** includes a λ/4 member (also referred to as "third λ/4 member") **60a.** An angle formed by the absorption axis of the polarizing member **10** and the slow axis of the third λ/4 member is, for example, from 40° to 50°, and may be from 42° to 48°, or may be about 45°. When the display element **12** is an organic EL display, a problem, such as ambient light reflection or background reflection, due to a metal layer that may be incorporated into the organic EL display can be solved by arranging the third A/4 member on the front side (viewer side) of an organic EL panel together with the polarizing member **10.** When the second retardation member **60** is free of any member other than the third A/4 member, the second retardation member **60** may correspond to the third λ/4 member.

The first retardation member **20** may include a member whose refractive index characteristic shows the relationship of nz>nx=ny (hereinafter also referred to as "first positive C-plate") in addition to the first λ/4 member **20a,** though the positive C-plate is not shown in each of FIG. 2 and FIG. **3****.** In this case, in the first retardation member **20,** the first λ/4 member **20a** is preferably positioned on a side closer to the polarizing member **10** with respect to the first positive C-plate. The first λ/4 member **20a** and the first positive C-plate may be typically laminated via an adhesive layer.

The second retardation member **60** may include a member whose refractive index characteristic shows the relationship of nz>nx=ny (hereinafter also referred to as "second positive C-plate") in addition to the third λ/4 member **60a,** though the positive C-plate is not shown in FIG. **3****.** The third λ/4 member **60a** and the second positive C-plate may be typically laminated via an adhesive layer.

### <Polarizing Member>

The polarizing member **10** includes: an absorption-type polarizer **10a;** a display element-side protective layer **10b** arranged on the side thereof opposite to the side on which the first retardation member **20** is arranged; and a lens portion-side protective layer **10c** arranged on the side thereof on which the first retardation member **20** is arranged. One of the display element-side protective layer **10b** and the lens portion-side protective layer **10c** may be omitted in accordance with purposes. The polarizing member preferably includes the absorption-type polarizer **10a** and the display element-side protective layer **10b.**

The absorption-type polarizer includes, for example, a resin film containing a dichroic substance. The thickness of the absorption-type polarizer is, for example, 1 µm or more and 20 µm or less, and may be 2 µm or more and 15 µm or less, may be 12 µm or less, may be 10 µm or less, may be 8 µm or less, or may be 5 µm or less.

The above-mentioned absorption-type polarizer may be produced from a single-layer resin film, or may be produced by using a laminate of two or more layers.

When the absorption-type polarizer is produced from the single-layer resin film, the absorption-type polarizer may be obtained by, for example, subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, stretching treatment, or the like. Of such polarizers, an absorption-type polarizer obtained by dyeing a PVA-based film with iodine and uniaxially stretching the dyed film is preferred.

The above-mentioned dyeing with iodine is performed by, for example, immersing the PVA-based film in an aqueous solution of iodine. The stretching ratio of the above-mentioned uniaxial stretching is preferably from 3 times to 7 times. The stretching may be performed after the dyeing treatment, or may be performed while the dyeing is performed. Alternatively, the dyeing may be performed after the stretching. The PVA-based film is subjected to swelling treatment, cross-linking treatment, washing treatment, drying treatment, or the like as required.

When the absorption-type polarizer is produced by using the above-mentioned laminate of two or more layers, the laminate is, for example, a laminate of a resin substrate and a PVA-based resin layer (PVA-based resin film) laminated on the resin substrate or a laminate of a resin substrate and a PVA-based resin layer formed on the resin substrate through application. The absorption-type polarizer obtained by using the laminate of the resin substrate and the PVA-based resin layer formed on the resin substrate through application may be produced, for example, by: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the absorption-type polarizer. In this embodiment, a polyvinyl alcohol-based resin layer containing a halide and a polyvinyl alcohol-based resin is preferably formed on one side of the resin substrate. The stretching typically includes stretching the laminate under a state in which the laminate is immersed in an aqueous solution of boric acid. Further, the stretching may further include in-air stretching of the laminate at high temperature (e.g., 95°C or more) before the stretching in the aqueous solution of boric acid as required. In addition, in this embodiment, the laminate is preferably subjected to drying shrinkage treatment, which includes heating the laminate, while conveying the laminate in its lengthwise direction, to shrink the laminate by 2% or more in its widthwise direction. The production method of this embodiment typically includes subjecting the laminate to in-air auxiliary stretching treatment, dyeing treatment, underwater stretching treatment, and drying shrinkage treatment in the stated order. When the auxiliary stretching is introduced, even in the case where PVA is applied onto a thermoplastic resin, the crystallinity of the PVA can be improved, and hence high optical characteristics can be achieved. In addition, when the alignment property of the PVA is improved in advance simultaneously with the crystallinity improvement, problems, such as a reduction in alignment property of the PVA and the dissolution thereof, can be prevented at the time of the immersion of the laminate in water in the subsequent dyeing step or stretching step, and hence high optical characteristics can be achieved. Further, in the case where the PVA-based resin layer is immersed in a liquid, the disturbance of the alignment of polyvinyl alcohol molecules and reductions in alignment properties thereof can be suppressed as compared to those in the case where the PVA-based resin layer is free of any halide. Thus, the optical characteristics of the absorption-type polarizer to be obtained through treatment steps performed by immersing the laminate in a liquid, such as the dyeing treatment and the underwater stretching treatment, can be improved. Further, the optical characteristics can be improved by shrinking the laminate in its widthwise direction through the drying shrinkage treatment. The resultant laminate of the resin substrate and the absorption-type polarizer may be used as it is (that is, the resin substrate may be used as a protective layer for the absorption-type polarizer), or may be used by laminating any appropriate protective layer in accordance with purposes on the peeled surface on which the resin substrate has been peeled from the laminate of the resin substrate and the absorption-type polarizer, or on a surface on the side opposite to the peeled surface. Details about such method of producing the absorption-type polarizer are described in, for example, JP 2012-73580 A and JP 6470455 B1, the descriptions of which are incorporated herein by reference in their entirety.

Each of the display element-side protective layer and the lens portion-side protective layer described above includes any appropriate film that may be used as a protective layer for the absorption-type polarizer. Examples of a material for forming the protective layer include: a cellulose-based resin such as triacetyl cellulose (TAC); a cycloolefin-based resin such as polynorbornene; a (meth)acrylic resin; a polyester-based resin, such as polyethylene terephthalate (PET) or polyethylene naphthalate (PEN); a polyolefin-based resin such as polyethylene; and a polycarbonate-based resin. A typical example of the (meth)acrylic resin is a (meth)acrylic resin having a lactone ring structure. The (meth)acrylic resin having a lactone ring structure is described in, for example, JP 2000-230016 A, JP 2001-151814 A, JP 2002-120326 A, JP 2002-254544 A, and JP 2005-146084 A, the descriptions of which are incorporated herein by reference in their entirety.

The thickness of each of the protective layers is, for example, from 10 µm to 80 µm, preferably from 15 µm to 70 µm, more preferably from 20 µm to 50 µm.

The cross transmittance (Tc) of the absorption-type polarizing member (absorption-type polarizer) is preferably 0.5% or less, more preferably 0.1% or less, still more preferably 0.05% or less. The single layer transmittance (Ts) of the absorption-type polarizing member (absorption-type polarizer) is, for example, from 41.0% to 45.0%, preferably 42.0% or more. The polarization degree (P) of the absorption-type polarizing member (absorption-type polarizer) is, for example, from 99.0% to 99.997%, preferably 99.9% or more.

### <First A/4 Member>

The in-plane retardation Re(550) and the wavelength dispersion characteristic of the retardation value, of the first λ/4 member **20a** are as described in the section A. In addition, in the optical laminate, an angle formed by the slow axis of the first λ/4 member and the absorption axis of the polarizing member is, for example, from 40° to 50°, and may be from 42° to 48°, or may be about 45°.

The refractive index characteristic of the first λ/4 member preferably shows the relationship of nx>ny≥nz. The equation "ny=nz" as used herein encompasses not only a case in which the ny and the nz are completely equal to each other but also a case in which the ny and the nz are substantially equal to each other. Accordingly, the ny may be less than the nz. The Nz coefficient of the first λ/4 member is preferably from 0.9 to 3, more preferably from 0.9 to 2.5, still more preferably from 0.9 to 1.5, particularly preferably from 0.9 to 1.3.

The first λ/4 member is formed from any appropriate material that may satisfy the above-mentioned characteristics. The first λ/4 member may be, for example, a stretched film of a resin film or an alignment fixed layer of a liquid crystal compound.

A resin to be incorporated into the above-mentioned resin film is, for example, a polycarbonate-based resin, a polyester carbonate-based resin, a polyester-based resin, a polyvinyl acetal-based resin, a polyarylate-based resin, a cyclic olefin-based resin, a cellulose-based resin, a polyvinyl alcohol-based resin, a polyamide-based resin, a polyimide-based resin, a polyether-based resin, a polystyrene-based resin, or an acrylic resin. Those resins may be used alone or in combination thereof. A method for the combination is, for example, blending or copolymerization. When the first λ/4 member shows a reverse wavelength dispersion characteristic, a resin film containing a polycarbonate-based resin or a polyester carbonate-based resin (hereinafter sometimes simply referred to as "polycarbonate-based resin") may be suitably used.

Any appropriate polycarbonate-based resin may be used as the above-mentioned polycarbonate-based resin. For example, the polycarbonate-based resin includes a structural unit derived from a fluorene-based dihydroxy compound, a structural unit derived from an isosorbide-based dihydroxy compound, and a structural unit derived from at least one dihydroxy compound selected from the group consisting of: an alicyclic diol; an alicyclic dimethanol; di-, tri-, or polyethylene glycol; and an alkylene glycol or spiroglycol. The polycarbonate-based resin preferably includes a structural unit derived from a fluorene-based dihydroxy compound, a structural unit derived from an isosorbide-based dihydroxy compound, and a structural unit derived from an alicyclic dimethanol and/or a structural unit derived from di-, tri-, or polyethylene glycol, and more preferably includes a structural unit derived from a fluorene-based dihydroxy compound, a structural unit derived from an isosorbide-based dihydroxy compound, and a structural unit derived from di-, tri-, or polyethylene glycol. The polycarbonate-based resin may include a structural unit derived from any other dihydroxy compound as required. Details about the polycarbonate-based resin that may be suitably used in the first λ/4 member and a method of forming the first λ/4 member are described in, for example, JP 2014-10291 A, JP 2014-26266 A, JP 2015-212816 A, JP 2015-212817 A, and JP 2015-212818 A, the descriptions of which are incorporated herein by reference.

The thickness of the first λ/4 member including the stretched film of the resin film is, for example, from 10 µm to 100 µm, preferably from 10 µm to 70 µm, more preferably from 20 µm to 60 µm.

The above-mentioned alignment fixed layer of the liquid crystal compound is such a layer that the liquid crystal compound is aligned in a predetermined direction in the layer, and its alignment state is fixed. The term "alignment fixed layer" is a concept encompassing an alignment cured layer obtained by curing a liquid crystal monomer as described later. In the first λ/4 member, the molecules of a rod-shaped liquid crystal compound are typically aligned under the state of being lined up in the slow axis direction of the first λ/4 member (homogeneous alignment). Examples of the rod-shaped liquid crystal compound include a liquid crystal polymer and a liquid crystal monomer. The liquid crystal compound is preferably polymerizable. When the liquid crystal compound is polymerizable, the alignment state of the liquid crystal compound can be fixed by aligning the liquid crystal compound and then polymerizing the compound.

The above-mentioned alignment fixed layer of the liquid crystal compound (liquid crystal alignment fixed layer) may be formed by: subjecting the surface of a predetermined substrate to alignment treatment; applying an application liquid containing a liquid crystal compound to the surface; aligning the liquid crystal compound in a direction corresponding to the above-mentioned alignment treatment; and fixing the alignment state. Any appropriate alignment treatment may be adopted as the alignment treatment. Specific examples thereof include mechanical alignment treatment, physical alignment treatment, and chemical alignment treatment. Specific examples of the mechanical alignment treatment include rubbing treatment and stretching treatment. Specific examples of the physical alignment treatment include magnetic field alignment treatment and electric field alignment treatment. Specific examples of the chemical alignment treatment include an oblique deposition method and photoalignment treatment. Any appropriate conditions may be adopted as treatment conditions for each of various alignment treatments in accordance with purposes.

The alignment of the liquid crystal compound is performed through treatment at a temperature at which the liquid crystal compound shows a liquid crystal phase in accordance with the kind of the liquid crystal compound. When the treatment at such temperature is performed, the liquid crystal compound adopts a liquid crystal state, and the liquid crystal compound is aligned in accordance with the alignment treatment direction of the surface of the substrate.

In one embodiment, the fixation of the alignment state is performed by cooling the liquid crystal compound aligned as described above. When the liquid crystal compound is polymerizable or cross-linkable, the fixation of the alignment state is performed by subjecting the liquid crystal compound aligned as described above to polymerization treatment or cross-linking treatment.

Any appropriate liquid crystal polymer and/or liquid crystal monomer is used as the above-mentioned liquid crystal compound. The liquid crystal polymers and the liquid crystal monomers may each be used alone or in combination thereof. Specific examples of the liquid crystal compound and a method of producing the liquid crystal alignment fixed layer are described in, for example, JP 2006-163343 A, JP 2006-178389 A, and WO 2018/123551 A1, the descriptions of which are incorporated herein by reference.

The thickness of the first λ/4 member including the liquid crystal alignment fixed layer is, for example, from 1 µm to 10 µm, preferably from 1 µm to 8 µm, more preferably from 1 µm to 6 µm, still more preferably from 1 µm to 4 µm.

### <First Positive C-plate>

The thickness direction retardation Rth(550) of the first positive C-plate is preferably from -20 nm to -200 nm, more preferably from -30 nm to -180 nm, still more preferably from - 40 nm to -160 nm, particularly preferably from -50 nm to -140 nm. The equation "nx=ny" as used herein encompasses not only a case in which the nx and the ny are strictly equal to each other but also a case in which the nx and the ny are substantially equal to each other. The in-plane retardation Re(550) of the first positive C-plate is, for example, less than 10 nm.

The first positive C-plate may be formed from any appropriate material. The first positive C-plate preferably includes a film containing a liquid crystal material fixed in homeotropic alignment. The liquid crystal material (liquid crystal compound) that can be homeotropically aligned may be a liquid crystal monomer or a liquid crystal polymer. Specific example of such liquid crystal compound and a method of forming the positive C-plate includes, for example, a liquid crystal compound and a method of forming the retardation layer described in paragraphs [0020] to [0028] of JP 2002-333642 A. In this case, the thickness of the first positive C-plate is preferably from 0.5 µm to 5 µm.

### <Third A/4 Member>

The in-plane retardation Re(550) of the third λ/4 member **60a** is, for example, from 100 nm to 190 nm, and may be from 110 nm to 180 nm, may be from 130 nm to 160 nm, or may be from 135 nm to 155 nm. The third A/4 member preferably shows such a reverse wavelength dispersion characteristic that its retardation value increases with an increase in wavelength of measurement light. The ratio "Re(450)/Re(550)" of the third A/4 member is, for example, 0.75 or more and less than 1, and may be 0.8 or more and 0.95 or less. The refractive index characteristic of the third λ/4 member preferably shows the relationship of nx>ny ≥nz. The Nz coefficient of the third A/4 member is preferably from 0.9 to 3, more preferably from 0.9 to 2.5, still more preferably from 0.9 to 1.5, particularly preferably from 0.9 to 1.3.

The third A/4 member is formed from any appropriate material that may satisfy the above-mentioned characteristics. The third λ/4 member may be, for example, a stretched film of a resin film or an alignment fixed layer of a liquid crystal compound. The same description as that of the above-mentioned first λ/4 member may be applied to the third λ/4 member including the stretched film of the resin film or the alignment fixed layer of the liquid crystal compound. The first λ/4 member and the third λ/4 member may be members having the same configuration (e.g., a formation material, a thickness, or an optical characteristic), or may be members having different configurations.

### <Second Positive C-plate>

The thickness direction retardation Rth(550) of the second positive C-plate is preferably from -20 nm to -200 nm, more preferably from -30 nm to -180 nm, still more preferably from - 40 nm to -160 nm, particularly preferably from -50 nm to -140 nm. The equation "nx=ny" as used herein encompasses not only a case in which the nx and the ny are strictly equal to each other but also a case in which the nx and the ny are substantially equal to each other. The in-plane retardation Re(550) of the second positive C-plate is, for example, less than 10 nm.

The second positive C-plate may be formed from any appropriate material. The second positive C-plate preferably includes a film containing a liquid crystal material fixed in homeotropic alignment. The same description as that of the above-mentioned first positive C-plate may be applied to each of a formation material and formation method for such second positive C-plate. The first positive C-plate and the second positive C-plate may be members having the same configuration (e.g., a formation material, a thickness, or an optical characteristic), or may be members having different configurations.

### <Protective Member>

The protective member **30** typically includes a substrate. The substrate may include any appropriate film. Examples of a material serving as a main component for the film for forming the substrate include a cellulose-based resin such as triacetyl cellulose (TAC), a polyester-based resin, a polyvinyl alcohol-based resin, a polycarbonate-based resin, a polyamide-based resin, a polyimide-based resin, a polyether sulfone-based resin, a polysulfone-based resin, a polystyrene-based resin, and a cycloolefin-based resin such as polynorbornene, a polyolefin-based resin, a (meth)acrylic resin, and an acetate-based resin. The thickness of the substrate is preferably from 5 µm to 80 µm, more preferably from 10 µm to 50 µm, still more preferably from 15 µm to 40 µm.

The protective member **30** is preferably a laminated film including the substrate and a surface-treated layer. The protective member including the surface-treated layer may be arranged so that its substrate may be positioned on the first retardation member **20** side. The thickness of the surface-treated layer is, for example, from 0.5 µm to 10 µm, and may be from 1 µm to 7 µm, or may be from 2 µm to 5 µm. The surface-treated layer may have any appropriate function. The surface-treated layer preferably has, for example, an antireflection function.

### <Adhesion Layer>

An adhesive layer or a pressure-sensitive adhesive layer is typically used as each of the adhesion layers. The surface adhesion layer for bonding the optical laminate itself to any other member is preferably a pressure-sensitive adhesive layer. The adhesion layer for bonding adjacent members to each other may be an adhesive layer or a pressure-sensitive adhesive layer. In one embodiment, at least one selected from the first adhesion layer, the second adhesion layer, and the third adhesion layer is a pressure-sensitive adhesive layer, and two or three thereof may each be a pressure-sensitive adhesive layer. The adhesion layer arranged directly adjacent to the support layer is preferably a pressure-sensitive adhesive layer because a storage modulus of elasticity to be described later may be suitably satisfied.

The storage modulus of elasticity (at 23°C) of the adhesion layer arranged directly adjacent to the support layer is, for example, from 0.01 MPa to 1 MPa, preferably from 0.05 MPa to 0.5 MPa, more preferably from 0.08 MPa to 0.2 MPa. The effect of the present invention can be suitably obtained by using the adhesion layer having such storage modulus of elasticity as the bonding surface to the support layer. The storage modulus of elasticity may be measured by, for example, the following measurement method.

### <Method of measuring Storage Modulus of Elasticity>

A laminated product obtained as follows is used as a sample for measurement: a plurality of pressure-sensitive adhesive layers are laminated so as to have a thickness of about 1.5 mm. "Advanced Rheometric Expansion System (ARES)" manufactured by Rheometric Scientific, Inc. is used as a measuring apparatus, and dynamic viscoelasticity measurement is performed under the following conditions, followed by the reading of the storage modulus of elasticity of the sample at 23°C from the results of the measurement.

### (Measurement Conditions)

| | |
|---|---|
| ·Deformation mode: | distortion |
| ·Frequency: | 1 Hz |
| ·Pressure bonding load: | 100 g |
| ·Rate of temperature increase: | 5°C/min |
| ·Temperature range: | from -50°C to 150°C |
| ·Shape: | parallel plates, 8.0 mmϕ |

The pressure-sensitive adhesive layer may be formed from any appropriate pressure-sensitive adhesive. Specific examples thereof include an acrylic pressure-sensitive adhesive, a rubber-based pressure-sensitive adhesive, a silicone-based pressure-sensitive adhesive, a polyester-based pressure-sensitive adhesive, a urethane-based pressure-sensitive adhesive, an epoxy-based pressure-sensitive adhesive, and a polyether-based pressure-sensitive adhesive. The pressure-sensitive adhesive contains a base resin, and may further contain various additives, such as a cross-linking agent, a polymerization initiator, a polymerization catalyst, a cross-linking catalyst, a silane coupling agent, a tackifier, a plasticizer, a softening agent, a deterioration-preventing agent, a filler, a colorant, a UV absorber, an antioxidant, a surfactant, and an antistatic agent, in accordance with purposes to the extent that the characteristics of the present invention are not impaired. A pressure-sensitive adhesive having desired characteristics in accordance with purposes may be prepared by adjusting, for example, the kinds, combination, and blending ratios of monomers for forming the base resin of the pressure-sensitive adhesive, the kinds, combination, and blending amounts of the additives (e.g., a cross-linking agent), a reaction temperature, and a reaction time. The base resins of the pressure-sensitive adhesive may be used alone or in combination thereof. An acrylic resin is preferably used as the base resin. Specifically, the pressure-sensitive adhesive layer preferably includes an acrylic pressure-sensitive adhesive containing a (meth)acrylic polymer as a main component.

The thickness of the pressure-sensitive adhesive layer is, for example, 3 µm or more, preferably 5 µm or more, and is, for example, 50 µm or less, preferably 30 µm or less.

The pressure-sensitive adhesive layer may be formed by applying a pressure-sensitive adhesive composition, which contains the base resin, an additive such as a cross-linking agent, and a solvent, and drying the applied composition. For example, the following may be performed: the pressure-sensitive adhesive composition is applied to a base such as a release liner, and is dried to form the pressure-sensitive adhesive layer; and the layer is transferred onto a target member. In addition, the pressure-sensitive adhesive layer may be formed by, for example, directly applying the pressure-sensitive adhesive composition to the target member, and drying the applied composition. The drying is typically performed by heating.

The adhesive layer may be formed from any appropriate adhesive. For example, the adhesive irreversibly changes its state from a liquid to a solid in a process for the formation of the adhesive layer, has fluidity at the time of its application, and has such a property as to be cured by curing treatment (e.g., active energy ray irradiation or heating). A curable adhesive is preferably used as the adhesive. A UV-curable adhesive is preferably used as the curable adhesive.

The above-mentioned UV-curable adhesive contains, as a curable monomer, a curable monomer, such as a compound having a (meth)acryloyl group or a compound having a vinyl group. Of those, a compound having a (meth)acryloyl group is preferably used. The term "(meth)acryloyl group" as used herein refers to an acryloyl group and/or a methacryloyl group.

The thickness of the adhesive layer is, for example, from 0.1 µm to 5 µm, preferably from 0.5 µm to 4 µm, more preferably from 1 µm to 3 µm.

### <Support Layer>

The position of the support layer **50** in the optical laminate is not limited to the illustrated examples. The support layer **50** may be arranged directly adjacent to at least one adhesion layer appropriately selected from all the adhesion layers of the optical laminate. For example, the support layer may be arranged directly adjacent to an adhesion layer, which is at least one selected from the surface adhesion layer, the first adhesion layer, and the second adhesion layer, and if any, the third adhesion layer, and is preferably a pressure-sensitive adhesive layer. The support layer may be preferably arranged directly adjacent to at least one selected from the surface adhesion layer, the first adhesion layer, and the third adhesion layer because a defect present at a position close to the display element tends to have a large influence on the viewability of the display system. The number of the support layers in the optical laminate is, for example, from 1 to 3.

The indentation modulus of elasticity of the support layer is, for example, 1 GPa or more, preferably 2 GPa or more, more preferably from 3 GPa to 12 GPa, still more preferably from 4 GPa to 10 GPa. The occurrence of an air bubble can be suitably suppressed by arranging the adhesion layer directly adjacent to the support layer having such indentation modulus of elasticity. The above-mentioned indentation modulus of elasticity is a value obtained by a nanoindentation method.

The hardness of the support layer is, for example, 0.05 GPa or more, preferably 0.1 GPa or more, more preferably from 0.2 GPa to 2 GPa, still more preferably from 0.3 GPa to 1 GPa. The above-mentioned hardness is a value obtained by a nanoindentation method.

The plastic deformation amount of the support layer is, for example, 200 nm or less, preferably from 0 nm to 150 nm, more preferably from 10 nm to 100 nm, still more preferably from 20 nm to 80 nm. The above-mentioned plastic deformation amount is a value obtained by a nanoindentation method.

The support layer may include any appropriate material that may form a layer having the above-mentioned characteristics. For example, the support layer is a cured layer of a curable material. In one embodiment, the support layer is a hard coat layer, and may be formed by: applying a support layer-forming material (hard coat layer-forming material) to a member on which the adhesion layer is to be laminated (e.g., the polarizing member, the first retardation member, the second retardation member, or the protective member); and curing the applied layer. The support layer-forming material typically contains a curable compound serving as a layer-forming component. The curing mechanism of the curable compound is, for example, a thermosetting mechanism or a photocurable mechanism. Examples of the curable compound include a monomer, an oligomer, and a prepolymer. A polyfunctional monomer or oligomer is preferably used as the curable compound. Examples of the polyfunctional monomer or oligomer include: a monomer or oligomer having two or more (meth)acryloyl groups; urethane (meth) acrylate or an oligomer of urethane (meth)acrylate; an epoxy-based monomer or oligomer; and a silicone-based monomer or oligomer.

In one embodiment, the support layer is arranged directly adjacent to the polarizing member, and is preferably arranged directly adjacent to the side of the polarizing member opposite to the side on which the first retardation member is arranged. In this embodiment, the support layer may be typically formed on the protective layer surface of the absorption-type polarizer. When a thin absorption-type polarizer and a protective layer are bonded to each other via an adhesive layer, unevenness may occur on the surface (protective layer surface) of a polarizing member to be obtained owing to shrinkage at the time of the curing of the adhesive layer. In contrast, the occurrence of such unevenness can be suppressed by bonding a protective layer with a support layer on which the support layer has been formed in advance and the absorption-type polarizer to each other via the adhesive layer. In addition, when the absorption-type polarizer and the protective layer are bonded to each other by a roll-to-roll process, unevenness may occur in the polarizing member to be obtained owing to step foreign matter. In contrast, when the support layer is formed on the protective layer surface of the polarizing member including the absorption-type polarizer and the protective layer bonded to each other via the adhesive layer, the unevenness is filled, and hence a flat surface can be formed. When the support layer is arranged directly adjacent to the polarizing member as described above, the unevenness on the surface of the polarizing member can be suppressed, and hence the occurrence of an air bubble at a lamination interface between the surface having the unevenness and the adhesion layer (e.g., a pressure-sensitive adhesive layer) can be suitably suppressed.

The thickness of the support layer is, for example, from 0.5 µm to 15 µm, preferably from 1 µm to 12 µm, more preferably from 3 µm to 10 µm.

### <Method of producing Optical Laminate>

The above-mentioned optical laminate may be produced by, for example, laminating the respective members via an adhesion layer. In one embodiment, the above-mentioned optical laminate may be produced by a method including: producing a polarizing member with a support layer, which includes a polarizing member including an absorption-type polarizer and a protective layer arranged on at least one side thereof, and a support layer arranged directly adjacent to the protective layer of the polarizing member; and laminating the adhesion layer (e.g., a pressure-sensitive adhesive layer) on the support layer side of the polarizing member with a support layer.

### Examples

The present invention is specifically described below by way of Examples. However, the present invention is not limited to these Examples. A thickness and a retardation value are values measured by the following measurement methods. In addition, the terms "part(s)" and "%" are by weight unless otherwise stated.

### <Thickness>

A thickness of 10 µm or less was measured with a scanning electron microscope (manufactured by JEOL Ltd., product name: "JSM-7100F"). A thickness of more than 10 µm was measured with a digital micrometer (manufactured by Anritsu Corporation, product name: "KC-351C").

### <Retardation Value>

A retardation value at each wavelength was measured with a retardation-measuring apparatus (KOBRA manufactured by Oji Scientific Instruments Co., Ltd.) at 23°C.

### [Production Example 1: Production of λ/4 Member A]

Polymerization was performed with a batch polymerization apparatus formed of two vertical reactors each including a stirring blade and a reflux condenser controlled to 100°C. 29.60 Parts by weight (0.046 mol) of bis[9-(2-phenoxycarbonylethyl)fluoren-9-yl]methane, 29.21 parts by weight (0.200 mol) of isosorbide (ISB), 42.28 parts by weight (0.139 mol) of spiroglycol (SPG), 63.77 parts by weight (0.298 mol) of diphenyl carbonate (DPC), and 1.19×10⁻² part by weight (6.78×10⁻⁵ mol) of calcium acetate monohydrate serving as a catalyst were loaded into the reactor. After the inside of the reactor had been purged with nitrogen under reduced pressure, the inside was warmed with a heat medium, and stirring was started at the time point when the internal temperature became 100°C. 40 Minutes after the start of the temperature increase, the internal temperature was caused to reach 220°C, and such control that the temperature was held was performed. At the same time, a pressure reduction was started, and a pressure in the reactor was set to 13.3 kPa in 90 minutes after the temperature had reached 220°C. Phenol vapor produced as a byproduct along with a polymerization reaction was introduced into the reflux condenser at 100°C, a monomer component present in a trace amount in the phenol vapor was returned to the reactor, and the phenol vapor that did not condense was introduced into a condenser at 45°C and recovered. Nitrogen was introduced into the first reactor to return the pressure therein to the atmospheric pressure once, and then an oligomerized reaction liquid in the first reactor was transferred to the second reactor. Next, a temperature increase and a pressure reduction in the second reactor were started, and the internal temperature and the pressure were set to 240°C and 0.2 kPa, respectively in 50 minutes. After that, the polymerization was advanced until predetermined stirring power was obtained. At the time point when the predetermined power was achieved, nitrogen was introduced into the reactor to return the pressure, and the produced polyester carbonate-based resin was extruded into water, followed by the cutting of a strand. Thus, a pellet was obtained.

The resultant polyester carbonate-based resin (pellet) was dried in a vacuum at 80°C for 5 hours, and then a resin film having an elongate shape, the film having a thickness of 135 µm, was produced from the resin with a film-forming apparatus including a single-screw extruder (manufactured by Toshiba Machine Co., Ltd., cylinder set temperature: 250°C), a T-die (width: 200 mm, set temperature: 250°C), a chill roll (set temperature: from 120°C to 130°C), and a winding machine. The resultant resin film having an elongate shape was stretched in its widthwise direction at a stretching temperature of 143°C and a stretching ratio of 2.8 times to provide a stretched film (λ/4 member A) having a thickness of 48 µm. The resultant stretched film had an Re(550) of 143 nm, a ratio "Re(450)/Re(550)" of 0.86, and an Nz coefficient of 1.12.

### [Production Example 2: Production of Protective Member A]

The following antireflection layer-forming material was applied to an acrylic film (thickness: 40 µm) having a lactone ring structure, and was heated at 80°C for 1 minute. UV light having an integrated light quantity of 300 mJ/cm² was applied from a high-pressure mercury lamp to the applied layer after the heating to cure the applied layer. Thus, a protective member A having formed thereon an antireflection layer having a thickness of 0.1 µm was obtained.

### (Antireflection Layer-forming Material)

100 Parts by weight of a polyfunctional acrylate containing pentaerythritol triacrylate as a main component (manufactured by Osaka Organic Chemical Industry Ltd., product name: "VISCOAT #300", solid content: 100 wt%), 150 parts by weight of hollow nano-silica particles (manufactured by JGC Catalysts and Chemicals Ltd., product name: "THRULYA 5320", solid content: 20 wt%, weight-average particle diameter: 75 nm), 50 parts by weight of solid nano-silica particles (manufactured by Nissan Chemical Corporation, product name: "MEK-2140Z-AC", solid content: 30 wt%, weight-average particle diameter: 10 nm), 12 parts by weight of a fluorine element-containing additive (manufactured by Shin-Etsu Chemical Co., Ltd., product name: "KY-1203", solid content: 20 wt%), and 3 parts by weight of a photopolymerization initiator (manufactured by BASF SE, product name: "OMNIRAD 907", solid content: 100 wt%) were mixed. A mixed solvent obtained by mixing tertiary butyl alcohol (TBA), methyl isobutyl ketone (MIBK), and propylene glycol monomethyl ether acetate (PMA) at a weight ratio of 60:25:15 was added as a diluting solvent to the mixture so that an entire solid content became 4 wt%, followed by stirring. Thus, an antireflection layer-forming material was prepared.

### [Production Example 3: Production of Polarizing Member A with Support Layer]

### 1. Production of Absorption-type Polarizer

An amorphous isophthalic acid-copolymerized polyethylene terephthalate film (thickness: 100 µm) having an elongate shape, the film having a water absorption ratio of 0.75% and a Tg of about 75°C, was used as a thermoplastic resin substrate. One surface of the resin substrate was subjected to corona treatment.

A mixture obtained by adding 13 parts by weight of potassium iodide to 100 parts by weight of a PVA-based resin, which had been obtained by mixing polyvinyl alcohol (polymerization degree: 4,200, saponification degree: 99.2 mol%) and acetoacetyl-modified PVA (manufactured by The Nippon Synthetic Chemical Industry Co., Ltd., product name: "GOHSEFIMER Z410") at 9:1, was dissolved in water to prepare a PVA aqueous solution (application liquid).

The above-mentioned PVA aqueous solution was applied to the corona-treated surface of the resin substrate, and was dried at 60°C to form a PVA-based resin layer having a thickness of 13 µm. Thus, a laminate was produced.

The resultant laminate was subjected to free-end uniaxial stretching in its longitudinal direction (lengthwise direction) at a ratio of 2.4 times between rolls having different peripheral speeds in an oven at 130°C (in-air auxiliary stretching treatment).

Next, the laminate was immersed in an insolubilizing bath having a liquid temperature of 40°C (aqueous solution of boric acid obtained by blending 100 parts by weight of water with 4 parts by weight of boric acid) for 30 seconds (insolubilizing treatment).

Next, the laminate was immersed in a dyeing bath having a liquid temperature of 30°C (aqueous solution of iodine obtained by blending 100 parts by weight of water with iodine and potassium iodide at a weight ratio of 1:7) for 60 seconds while the concentration of the aqueous solution was adjusted so that the single layer transmittance (Ts) of a polarizer to be finally obtained became 43.0% (dyeing treatment).

Next, the laminate was immersed in a cross-linking bath having a liquid temperature of 40°C (aqueous solution of boric acid obtained by blending 100 parts by weight of water with 3 parts by weight of potassium iodide and 5 parts by weight of boric acid) for 30 seconds (cross-linking treatment).

After that, while the laminate was immersed in an aqueous solution of boric acid having a liquid temperature of 70°C (boric acid concentration: 4.0 wt%, potassium iodide concentration: 5.0 wt%), the laminate was uniaxially stretched in the longitudinal direction (lengthwise direction) between rolls having different peripheral speeds so that the total stretching ratio became 5.5 times (underwater stretching treatment).

After that, the laminate was immersed in a washing bath having a liquid temperature of 20°C (aqueous solution obtained by blending 100 parts by weight of water with 4 parts by weight of potassium iodide) (washing treatment).

After that, the laminate was brought into contact with a SUS-made heating roll whose surface temperature was kept at 75°C for about 2 seconds while being dried in an oven kept at 90°C (drying shrinkage treatment). The percentage by which the laminate was shrunk in its widthwise direction by the drying shrinkage treatment was 5.2%.

Thus, an absorption-type polarizer having a thickness of 5 µm was formed on the resin substrate.

### 2. Production of Protective Layer with Support Layer

The following support layer-forming material was applied to an acrylic film (thickness: 40 µm) having a lactone ring structure, and was heated at 90°C for 1 minute. UV light having an integrated light quantity of 300 mJ/cm² was applied from a high-pressure mercury lamp to the applied layer after the heating to cure the applied layer. Thus, an acrylic film having formed on one surface thereof a support layer (hard coat layer) having a thickness of 7 µm was obtained as a protective layer with a support layer.

### (Support Layer-forming Material)

50 Parts of a urethane acrylic oligomer (manufactured by Shin-Nakamura Chemical Co., Ltd., "NK OLIGO UA-53H"), 30 parts of a polyfunctional acrylate containing pentaerythritol triacrylate as a main component (manufactured by Osaka Organic Chemical Industry Ltd., product name: "VISCOAT #300"), 20 parts of 4-hydroxybutyl acrylate (manufactured by Osaka Organic Chemical Industry Ltd.), 1 part of a leveling agent (manufactured by DIC Corporation, "GRANDIC PC4100"), and 3 parts of a photopolymerization initiator (manufactured by Ciba Japan K.K., "IRGACURE 907") were mixed, and the mixture was diluted with methyl isobutyl ketone so that its solid content concentration became 50%. Thus, a support layer-forming material was prepared.

### 3. Production of Polarizing Member

The above-mentioned protective layer with a support layer was bonded to the surface of the absorption-type polarizer of the laminate of the resin substrate and the absorption-type polarizer obtained in the above-mentioned section 1. via a UV-curable adhesive so that the acrylic film was on the absorption-type polarizer side. Specifically, the UV-curable adhesive was applied so as to have a thickness of 1.0 µm, and the bonding was performed with a roller machine. After that, a UV ray was applied from the protective layer with a support layer side to cure the adhesive. Next, the resin substrate was peeled from the absorption-type polarizer, and an acrylic film (thickness: 40 um) having a lactone ring structure was bonded to the peeled surface in the same manner as that described above. Thus, a polarizing member A with a support layer having the configuration [support layer/acrylic film/absorption-type polarizer/acrylic film] was obtained. In the polarizing member A with a support layer, the support layer is arranged directly adjacent to the polarizing member (more specifically, directly adjacent to the surface of the protective layer).

### [Production Example 4A: Production of Pressure-sensitive Adhesive Layer A]

A monomer mixture containing 91.5 parts of butyl acrylate, 3 parts of acrylic acid, 0.5 part of 4-hydroxybutyl acrylate, and 5 parts of acryloylmorpholine was loaded into a four-necked flask including a stirring blade, a temperature gauge, a nitrogen gas-introducing tube, and a condenser. Further, 0.1 part of 2,2'-azobisisobutyronitrile serving as a polymerization initiator was loaded into 100 parts of the monomer mixture together with 100 parts of ethyl acetate, and a nitrogen gas was introduced to purge the inside of the flask with nitrogen while the mixture was gently stirred. After that, a polymerization reaction was performed for 8 hours while a liquid temperature in the flask was kept at about 55°C. Next, ethyl acetate was added to the resultant reaction liquid to adjust its solid content concentration to 12 wt%. Thus, a solution of an acrylic polymer having a weight-average molecular weight (Mw) of 2,500,000 was prepared.

0.3 Part of benzoyl peroxide (product name: NYPER BMT, manufactured by Nippon Oil & Fats Co., Ltd.) serving as a peroxide-based cross-linking agent, 0.2 part of a tolylene diisocyanate adduct of trimethylolpropane (product name: "CORONATE L", manufactured by Tosoh Corporation), and 0.2 part of a silane coupling agent (product name: KBM-403, manufactured by Shin-Etsu Chemical Co., Ltd.) were blended into 100 parts of the solid content of the resultant acrylic polymer solution to prepare a pressure-sensitive adhesive composition.

The resultant pressure-sensitive adhesive composition was applied to the peeling surface of a release liner, which was such a PET film that its peeling surface had been subjected to release agent treatment, and the applied composition was dried to form a pressure-sensitive adhesive layer A having a thickness of 5 µm.

### [Production Example 4B: Production of Pressure-sensitive Adhesive Layer B]

A monomer mixture containing 94.9 parts by weight of butyl acrylate, 5 parts by weight of acrylic acid, and 0.1 part by weight of 2-hydroxyethyl acrylate was loaded into a four-necked flask including a stirring blade, a temperature gauge, a nitrogen gas-introducing tube, and a condenser. Further, 0.3 part by weight of dibenzoyl peroxide serving as a polymerization initiator was loaded into 100 parts of the monomer mixture together with ethyl acetate, and a nitrogen gas was introduced to purge the inside of the flask with nitrogen while the mixture was gently stirred. After that, a polymerization reaction was performed for 7 hours while a liquid temperature in the flask was kept at about 60°C. Next, ethyl acetate was added to the resultant reaction liquid to adjust its solid content concentration to 30 wt%. Thus, a solution of an acrylic polymer having a weight-average molecular weight (Mw) of 2,200,000 was prepared.

0.2 Part of benzoyl peroxide (product name: NYPER BMT, manufactured by Nippon Oil & Fats Co., Ltd.) serving as a peroxide-based cross-linking agent, 0.6 part of a tolylene diisocyanate adduct of trimethylolpropane (product name: "CORONATE L", manufactured by Tosoh Corporation), and 0.2 part of a silane coupling agent (product name: KBM-403, manufactured by Shin-Etsu Chemical Co., Ltd.) were blended into 100 parts of the solid content of the resultant acrylic polymer solution to prepare a pressure-sensitive adhesive composition.

The resultant pressure-sensitive adhesive composition was applied to the peeling surface of a release liner, which was such a PET film that its peeling surface had been subjected to release agent treatment, and the applied composition was dried to form a pressure-sensitive adhesive layer B having a thickness of 15 µm.

### [Example 1]

The pressure-sensitive adhesive layer B was bonded to each of both the sides of the λ/4 member A serving as a second retardation member together with the release liner. The release liner on one side was peeled, and the pressure-sensitive adhesive layer B thus exposed was bonded to the support layer-side surface of the polarizing member A with a support layer. Thus, a laminate 1 having the laminated configuration [release liner/pressure-sensitive adhesive layer B/second retardation member/pressure-sensitive adhesive layer B/support layer/polarizing member] was obtained. At this time, the bonding was performed so that the absorption axis of the absorption-type polarizer and the slow axis of the λ/4 member A formed an angle of 45°.

The protective member A was bonded to one side of the λ/4 member A serving as a first retardation member via the pressure-sensitive adhesive layer B. At this time, the bonding was performed so that the acrylic film of the protective member A was positioned on the A/4 member A side. Thus, a laminate 2 having the laminated configuration [first retardation member/pressure-sensitive adhesive layer B/protective member A] was obtained.

The laminate 2 was bonded to the polarizing member side of the laminate 1 via the pressure-sensitive adhesive layer A. At this time, the bonding was performed so that the first retardation member of the laminate 2 was positioned on the pressure-sensitive adhesive layer A side, and so that an angle formed by the slow axis of the λ/4 member A of the laminate 1 and the slow axis of the A/4 member A of the laminate 2 was 0°. Thus, an optical laminate A having the laminated configuration [release liner/pressure-sensitive adhesive layer B/second retardation member/pressure-sensitive adhesive layer B/support layer/polarizing member/pressure-sensitive adhesive layer A/first retardation member/pressure-sensitive adhesive layer B/protective member A] was obtained. In the optical laminate A, the support layer is arranged directly adjacent to the protective layer of the absorption-type polarizer, and the pressure-sensitive adhesive layer B is arranged directly adjacent to the support layer.

### <Air Bubble Evaluation>

The resultant optical laminate A was observed with a microscope. As a result, the number of air bubbles occurring at an interface between the support layer and the pressure-sensitive adhesive layer B, the air bubbles each having a size of 10 µm or more, was 1 air bubble/100 cm² or less, and hence fell within a practically acceptable range.

### <Characteristic Evaluation of Support Layer>

The polarizing member A with a support layer was cut into a square measuring 10 mm by 10 mm and used as a measurement sample. Nanoindentation measurement was performed on the support layer by using the measurement sample under the following conditions.

| | |
|---|---|
| ·Measuring apparatus: | a product available under the product name "Triboindenter" from Hysitron, Inc. |
| ·Used indenter: | Berkovich (triangular pyramid type) |
| ·Measuring method: | single indentation measurement |
| ·Measurement temperature: | room temperature (about 25°C) |
| ·Indentation depth setting: | 200 nm |
| ·Indentation speed: | 20 nm/s |

The indentation modulus of elasticity (S√π/2√A), hardness (Pmax/A), and plastic deformation amount of the support layer were calculated from the results of the measurement with software (triboscan) attached to the measuring apparatus (S: contact stiffness, A: contact projected area, Pmax: maximum load). The measurement was performed N times (N=3), and the average of the measured values was adopted as each of the indentation modulus of elasticity, hardness, and plastic deformation amount of the support layer. As a result, the support layer had an indentation modulus of elasticity of 6.01 GPa, a hardness of 0.383 GPa, and a plastic deformation amount of 47.0 nm.

The present invention is not limited to the above-mentioned embodiments, and various modifications may be made thereto. For example, the configurations described in the above-mentioned embodiments may each be replaced by substantially the same configuration, a configuration having the same action and effect, and a configuration that can achieve the same object.

### Industrial Applicability

The optical laminate according to the embodiment of the present invention may be suitably used in a display system such as a pair of VR goggles.

### Reference Signs List

**2** display system, **4** lens unit, **12** display element, **14** reflection-type polarizing member, **16** first lens portion, **18** half mirror, **20** first retardation member, **22** lens portion retardation member, **24** second lens portion, **30** protective member, **42** surface adhesion layer, **44** first adhesion layer, **46** second adhesion layer, **48** third adhesion layer, **50** support layer, **60** second retardation member, **100** optical laminate

## Claims

1. An optical laminate, comprising:
a polarizing member including an absorption-type polarizer and a protective layer arranged on at least one side thereof; and
a first retardation member,
wherein the optical laminate further comprises a support layer having an indentation modulus of elasticity of 1 GPa or more, and
wherein an adhesion layer is arranged directly adjacent to the support layer.

2. The optical laminate according to claim 1, wherein the optical laminate comprises a surface adhesion layer, the polarizing member, a first adhesion layer, the first retardation member, a second adhesion layer, and a protective member in the stated order.

3. The optical laminate according to claim 2, wherein at least one selected from the surface adhesion layer, the first adhesion layer, and the second adhesion layer is arranged directly adjacent to the support layer.

4. The optical laminate according to claim 1, wherein the optical laminate comprises a surface adhesion layer, a second retardation member, a third adhesion layer, the polarizing member, a first adhesion layer, the first retardation member, a second adhesion layer, and a protective member in the stated order.

5. The optical laminate according to claim 4, wherein at least one selected from the surface adhesion layer, the first adhesion layer, the second adhesion layer, and the third adhesion layer is arranged directly adjacent to the support layer.

6. The optical laminate according to claim 1, wherein the support layer is a hard coat layer.

7. The optical laminate according to claim 1, wherein the support layer has a thickness of from 0.5 µm to 15 µm.

8. The optical laminate according to claim 1, wherein the support layer is arranged directly adjacent to a side of the polarizing member opposite to a side on which the first retardation member is arranged.

9. The optical laminate according to claim 1, wherein the adhesion layer arranged directly adjacent to the support layer has a modulus of elasticity of from 0.01 MPa to 1 MPa.

10. A display system, comprising the optical laminate of any one of claims 1 to 9.
